(19) **Europäisches Patentamt / European Patent Office / Office européen des brevets**

(11) **EP 4 600 905 A1**

(12) **EUROPEAN PATENT APPLICATION**
published in accordance with Art. 153(4) EPC

(43) Date of publication:
**13.08.2025 Bulletin 2025/33**

(21) Application number: **23915683.9**

(22) Date of filing: **02.11.2023**

(51) International Patent Classification (IPC):
**G06T 7/73** (2017.01)

(52) Cooperative Patent Classification (CPC):
**G06T 7/593; G06N 3/045; G06N 3/0455;
G06N 3/0464; G06N 3/08; G06T 5/50; G06T 7/73;
G06T 7/80; G06T 7/85; G06T 17/00; G06T 19/00;**
G06T 2207/20084; G06T 2207/20221

(86) International application number:
**PCT/CN2023/129245**

(87) International publication number:
**WO 2024/148925 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.01.2023  CN 202310070284**

(71) Applicant: **Tencent Technology (Shenzhen)
Company Limited
Shenzhen, Guangdong 518057 (CN)**

(72) Inventors:
• **LIU, Weizhe
Shenzhen, Guangdong 518057 (CN)**
• **JI, Pan
Shenzhen, Guangdong 518057 (CN)**
• **LI, Hongdong
Shenzhen, Guangdong 518057 (CN)**

(74) Representative: **Nederlandsch Octrooibureau
P.O. Box 29720
2502 LS The Hague (NL)**

(54) **METHOD AND APPARATUS FOR DETERMINING THREE-DIMENSIONAL LAYOUT INFORMATION, DEVICE, AND STORAGE MEDIUM**

(57)    This application relates to the field of image processing technologies, and in particular, to a method and an apparatus for determining three-dimensional layout information, a device, and a storage medium. The foregoing method includes: obtaining a first image and a second image obtained by photographing a same scene region respectively by a first camera and a second camera at a same time (410); and generating three-dimensional layout information of the scene region based on a relative position between the first camera and the second camera, a photographing parameter of each of the first camera and the second camera, the first image, and the second image, the three-dimensional layout information being configured to obtain a three-dimensional spatial layout of at least one object in the scene region (420). The foregoing method can improve accuracy of layout information of the scene region.

| | |
|---|---|
| Obtain a first image and a second image obtained by photographing a same scene region respectively by a first camera and a second camera at a same time | 410 |
| Generate three-dimensional layout information of the scene region based on a relative position between the first camera and the second camera, a photographing parameter of each of the first camera and the second camera, the first image, and the second image | 420 |

**FIG. 4**

**Description**

RELATED APPLICATION

This application claims priority to Chinese Patent Application No. 202310070284.0, filed on January 12, 2023 and entitled "METHOD AND APPARATUS FOR DETERMINING THREE-DIMENSIONAL LAYOUT INFORMATION, DEVICE, AND STORAGE MEDIUM", which is incorporated herein by reference in its entirety.

FIELD OF THE TECHNOLOGY

Embodiments of this application relate to the field of image processing technologies, and in particular, to a method and an apparatus for determining three-dimensional layout information, a device, and a storage medium.

BACKGROUND OF THE DISCLOSURE

Room layout estimation is a technology for determining layout information of a room, which may be configured to implement a technology such as extended reality (XR).
In the related art, layout information of a room is determined based on a room image captured by a monocular camera. However, the layout information of the room obtained in this way is two-dimensional, which is different from a room layout in an actual three-dimensional space, and the layout information is not accurate enough.

SUMMARY

Embodiments of this application provide a method and an apparatus for determining three-dimensional layout information, a device, and a storage medium, which can improve accuracy of layout information of a scene region. The technical solutions are as follows.
According to an aspect of the embodiments of this application, a method for determining three-dimensional layout information is provided, the method being performed by a computer device and including:

  obtaining a first image and a second image obtained by photographing a same scene region respectively by a first camera and a second camera at a same time; and
  generating three-dimensional layout information of the scene region based on a relative position between the first camera and the second camera, a photographing parameter of each of the first camera and the second camera, the first image, and the second image, the three-dimensional layout information being configured to obtain a three-dimensional spatial layout of at least one object in the scene region.

In some embodiments, the generating three-dimensional layout information of the scene region based on a relative position between the first camera and the second camera, a photographing parameter of each of the first camera and the second camera, the first image, and the second image includes:

  generating an image feature of the first image and an image feature of the second image;

  fusing the image feature of the first image and the image feature of the second image based on the relative position between the first camera and the second camera and the photographing parameter of each of the first camera and the second camera, to generate a three-dimensional feature of the scene region, the three-dimensional feature being configured to obtain spatial information of the scene region; and

  generating the three-dimensional layout information of the scene region based on the three-dimensional feature of the scene region.

In some embodiments, the three-dimensional layout information is obtained by a three-dimensional layout estimation model, the three-dimensional layout estimation model including a neural network encoder, a three-dimensional feature fuser, and a neural network decoder;

  the neural network encoder being configured to generate the image feature of the first image and the image feature of the second image;

  the three-dimensional feature fuser being configured to fuse the image feature of the first image and the image feature of the second image based on the relative position between the first camera and the second camera and the photographing parameter of each of the first camera and the second camera, to generate the three-dimensional feature of the scene region; and

  the neural network decoder being configured to generate the three-dimensional layout information of the scene region based on the three-dimensional feature of the scene region.

In some embodiments, the three-dimensional feature fuser includes a first neural network and a second neural network, the first neural network being a neural network designed based on a binocular disparity estimation principle, and the second neural network being a recurrent neural network;

  the first neural network being configured to fuse the image feature of the first image and the image feature of the second image to generate a fused feature of the first image and the second image, the fused feature of the first image and the second image being configured to obtain comprehensively obtain the first image and the second image; and

the second neural network being configured to generate the three-dimensional feature of the scene region based on the fused feature of the first image and the second image.

In some embodiments, the three-dimensional layout information of the scene region includes three-dimensional pose information and annotation information of the at least one object in the scene region.

In some embodiments, the first camera and the second camera are arranged on a same device, and the relative positions of the first camera and the second camera are fixed.

In some embodiments, the device is a head-mounted display device; and
the method further includes:

constructing a virtual scene or a virtual object adapted to the scene region based on the three-dimensional layout information; and

displaying the virtual scene or the virtual object in the scene region.

In some embodiments, the relative position includes a distance, and the photographing parameter includes a focal length.

According to an aspect of the embodiments of this application, an apparatus for determining three-dimensional layout information is provided, the apparatus including:

an image obtaining module, configured to obtain a first image and a second image obtained by photographing a same scene region respectively by a first camera and a second camera at a same time; and

an information generation module, configured to generate three-dimensional layout information of the scene region based on a relative position between the first camera and the second camera, a photographing parameter of each of the first camera and the second camera, the first image, and the second image, the three-dimensional layout information being configured to obtain a three-dimensional spatial layout of at least one object in the scene region.

In some embodiments, the information generation module is configured to:

generate an image feature of the first image and an image feature of the second image;

fuse the image feature of the first image and the image feature of the second image based on the relative position between the first camera and the second camera and the photographing parameter of each of the first camera and the second camera, to generate a three-dimensional feature of the scene region, the three-dimensional feature being configured to obtain spatial information of the scene region; and

generate the three-dimensional layout information of the scene region based on the three-dimensional feature of the scene region.

In some embodiments, the three-dimensional layout information is obtained by a three-dimensional layout estimation model, the three-dimensional layout estimation model including a neural network encoder, a three-dimensional feature fuser, and a neural network decoder;

the neural network encoder being configured to generate the image feature of the first image and the image feature of the second image;

the three-dimensional feature fuser being configured to fuse the image feature of the first image and the image feature of the second image based on the relative position between the first camera and the second camera and the photographing parameter of each of the first camera and the second camera, to generate the three-dimensional feature of the scene region; and

the neural network decoder being configured to generate the three-dimensional layout information of the scene region based on the three-dimensional feature of the scene region.

In some embodiments, the three-dimensional feature fuser includes a first neural network and a second neural network, the first neural network being a neural network designed based on a binocular disparity estimation principle, and the second neural network being a recurrent neural network;

the first neural network being configured to fuse the image feature of the first image and the image feature of the second image to generate a fused feature of the first image and the second image, the fused feature of the first image and the second image being configured to comprehensively obtain the first image and the second image; and

the second neural network being configured to generate the three-dimensional feature of the scene region based on the fused feature of the first image and the second image.

In some embodiments, the three-dimensional layout information of the scene region includes three-dimensional pose information and annotation information of the at least one object in the scene region.

In some embodiments, the first camera and the second camera are arranged on a same device, and the relative positions of the first camera and the second camera are fixed.

In some embodiments, the device is a head-mounted display device; and The apparatus further includes:

a construction module, configured to construct a virtual scene or a virtual object adapted to the scene region based on the three-dimensional layout information; and

a display module, configured to display the virtual scene or the virtual object in the scene region.

In some embodiments, the relative position includes a distance, and the photographing parameter includes a focal length.

According to an aspect of the embodiments of this application, a computer device is provided, including a processor and a memory, the memory having a computer program stored therein, the computer program being loaded and executed by the processor to implement the foregoing method for determining three-dimensional layout information.

According to an aspect of the embodiments of this application, a computer-readable storage medium is provided, having a computer program stored therein, the computer program being loaded and executed by a processor to implement the foregoing method for determining three-dimensional layout information.

According to an aspect of the embodiments of this application, a computer program product is provided, the computer program product including a computer program, the computer program being stored in a computer-readable storage medium. A processor of a computer device reads the computer program from the computer-readable storage medium, and the processor executes the computer program, so that the computer device performs the foregoing method for determining three-dimensional layout information.

The technical solutions provided in the embodiments of this application may include the following beneficial effects.

The same scene region is photographed at the same time by using the first camera and the second camera, to obtain images of the same scene region photographed from two different angles at the same time. To be specific, the images of the scene region are obtained through a binocular camera, and a three-dimensional spatial layout of an object in the scene region is determined based on the images. Compared with two-dimensional layout information, the accuracy of the layout information of the scene region is improved.

The foregoing general descriptions and the following detailed descriptions are exemplary and explanatory only and are not intended to limit this application.

BRIEF DESCRIPTION OF THE DRAWINGS

FIG. 1 is a schematic diagram of a method for determining three-dimensional layout information according to an embodiment of this application.

FIG. 2 is a schematic diagram of a head-mounted display device according to an embodiment of this application.

FIG. 3 is a schematic diagram of an implementation environment according to an embodiment of this application.

FIG. 4 is a flowchart of a method for determining three-dimensional layout information according to an embodiment of this application.

FIG. 5 is a schematic diagram of a scene region according to an embodiment of this application.

FIG. 6 is a schematic diagram of a three-dimensional layout estimation model according to an embodiment of this application.

FIG. 7 is a schematic diagram of a binocular disparity estimation principle according to an embodiment of this application.

FIG. 8 is a block diagram of an apparatus for determining three-dimensional layout information according to an embodiment of this application.

FIG. 9 is a block diagram of a computer device according to an embodiment of this application.

DESCRIPTION OF EMBODIMENTS

Exemplary embodiments are to be described herein in detail, and examples of the exemplary embodiments are shown in the accompanying drawings. When the following description involves the accompanying drawings, unless otherwise indicated, the same numerals in different accompanying drawings represent the same or similar elements. The implementations described in the following exemplary embodiments do not represent all implementations consistent with this application. On the contrary, the implementations are merely examples of a method which are consistent with some aspects of this application described in detail in the attached claims.

According to this application, a prompt interface and a pop-up window may be displayed or voice prompt information is outputted before relevant data (for example, a first image and a second image mentioned in this application) of a user is collected and during collection of relevant data of the user. The prompt interface, the pop-up window, or the voice prompt information is configured to prompt the user that relevant data of the user is being collected currently, so that this application starts to perform the relevant operations of obtaining user-related data only after obtaining a confirm operation performed by the user on the prompt interface or the pop-up window, or otherwise (i.e., when the confirm operation performed by the user on the prompt interface or the pop-up window has not been obtained), the relevant operations of obtaining user-related data are ended, i.e., the user-related data is not obtained. In other words, all user data collected in this application is collected with the consent and authorization of users, and the collection, use, and processing of relevant user data need to comply with relevant laws, regulations, and standards of relevant countries and regions.

Artificial intelligence (AI) involves a theory, a method, a technology, and an application system that use a digital computer or a machine controlled by the digital computer to simulate, extend, and expand human intelligence, perceive an environment, obtain knowledge, and use knowledge to obtain an optimal result. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making.

The AI technology is a comprehensive discipline, and involves a wide range of fields including both the hardware-level technology and the software-level technology. Basic AI technologies generally include technologies such as a sensor, a dedicated AI chip, cloud computing, distributed storage, a big data processing technology, an operating/interaction system, and electromechanical integration. AI software technologies mainly include several major directions such as a computer vision (CV) technology, a speech processing technology, a natural language processing technology, and machine learning/deep learning.

CV is a field of science that studies how to use a machine to "see", and furthermore, that uses a camera and a computer device to replace human eyes to perform machine vision such as recognition and measurement on a target, and further perform graphic processing, so that the computer device processes the target into an image more suitable for human eyes to observe, or an image transmitted to an instrument for detection. As a scientific discipline, CV studies related theories and technologies and attempts to establish an AI system that can obtain information from images or multidimensional data. The CV technology generally includes technologies such as image processing, image recognition, image semantic understanding, image retrieval, optical character recognition (OCR), video processing, video semantic understanding, video content/behavior recognition, three-dimensional object reconstruction, three-dimensional technology, virtual reality (VR), augmented reality (AR), and simultaneous localization and mapping, and further includes common biometric recognition technologies such as face recognition and fingerprint recognition.

Machine learning (ML) is a multi-field interdiscipline, and relates to a plurality of disciplines such as the probability theory, statistics, the approximation theory, convex analysis, and the algorithm complexity theory. The ML specializes in studying how a computer simulates or implements a learning behavior of human to obtain new knowledge or skills and reorganize an existing knowledge structure to keep improving its performance. The ML is the core of the AI and a fundamental way to make computers intelligent, which is applied in all fields of the AI. The ML and the deep learning generally include technologies such as an artificial neural network, a confidence network, reinforcement learning, transfer learning, inductive learning, and learning from demonstration.

With the research and progress of AI technologies, the AI technology has been researched and applied in many fields, such as a common smart wearable device, a smart home, a virtual assistant, a smart speaker, smart marketing, unmanned driving, automatic driving, an unmanned aerial vehicle, a robot, smart medical care, smart customer service, and the like. It is believed that with the development of technologies, the AI technology is to be applied in more fields and plays increasingly important value.

The solutions provided in the embodiments of this application involve the technologies such as the CV and the ML of the AI. For example, an image captured by a binocular camera is processed through the CV technology. For another example, a three-dimensional layout estimation model is trained through the ML technology, and three-dimensional layout information of a scene region is generated by the three-dimensional layout estimation model. Embodiments of this application may be applied to the field of extended reality (XR). For example, when a user wears a head-mounted display device in a room and an XR application is running in the head-mounted display device, the head-mounted display device may capture a picture of the room and generate three-dimensional layout information of a scene region, which is convenient for the user to experience XR safely. The XR refers to creating a digital environment with a combination of a real world and a virtual world through modern scientific and technological means with a computer device as the core, which is a new-type human-computer interaction mode, and may bring users a sense of immersion of seamless transition and connection between the virtual world and the real world. The XR technology may specifically include AR, VR, mixed reality (MR), and the like. The technologies are specifically described through the following embodiments.

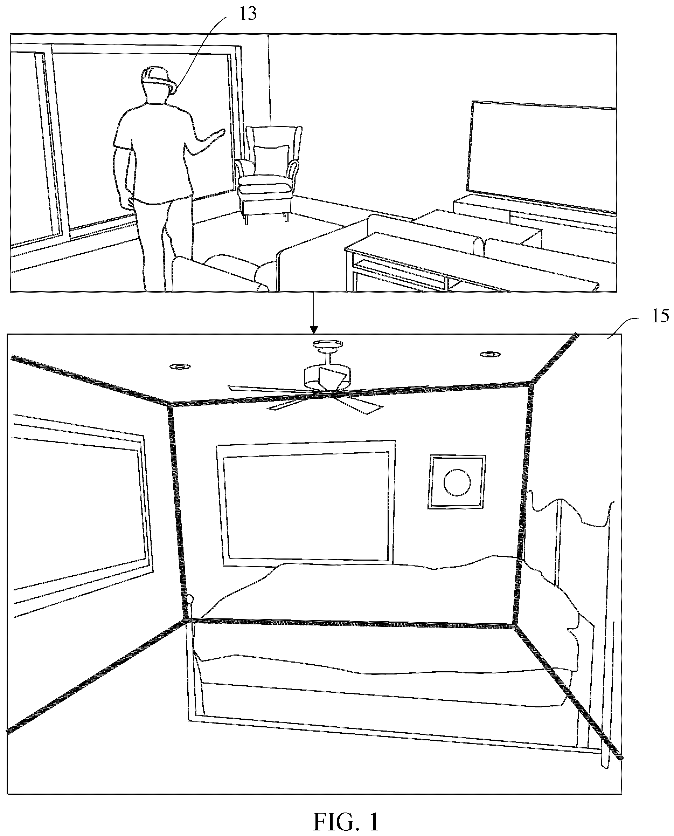

FIG. 1 is a schematic diagram of a method for determining three-dimensional layout information according to an embodiment of this application. As shown in FIG. 1, a user obtains two images (which may be referred to as a first image and a second image) of a room through a head-mounted display device 13. The two images are obtained by photographing a same region of the room at a same time respectively by two cameras (which may be referred to as a first camera and a second camera) integrated in the head-mounted display device 13. The first image and the second image are inputted into a three-dimensional layout estimation model, and the three-dimensional layout estimation model may generate and output a three-dimensional layout diagram 15 of the room. The three-dimensional layout diagram includes at least one annotation box (a box surrounded by bold lines in FIG. 1), which is configured to represent a frame part of the room, such as an annotation box corresponding to the ceiling of the room, an annotation box corresponding to the floor, and an annotation box corresponding to a left wall. In some embodiments, different annotation boxes in the three-dimensional layout diagram are displayed differently, such as displayed in different colors. For another example, the three-dimensional layout diagram is annotated with names of room regions corresponding to the annotation boxes, such as "ceiling", "floor", "left wall", and "right wall".

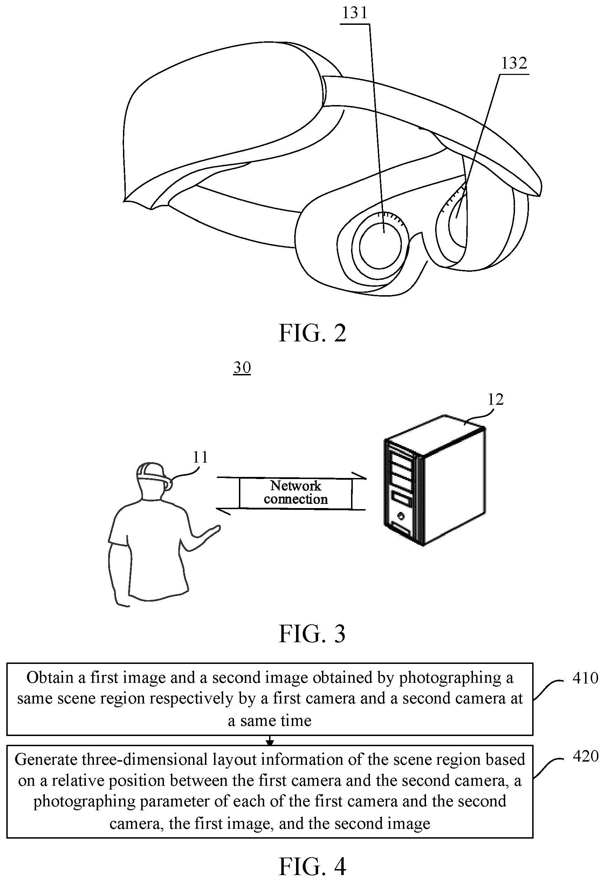

In some embodiments, as shown in FIG. 2, the first camera 131 and the second camera 132 in the head-mounted display device 13 are respectively located on two sides of the head-mounted display device 13. When a user wears the head-mounted display device, the first camera 131 is located in front of a left eye of a user, and the second camera 132 is located in front of a right eye of the user. Therefore, the first camera 131 may also be referred to as a left camera, and the second camera 132 may also be referred to as a right camera. In some embodiments, the first camera and the second camera may be infrared cameras, which can perform photographing in a dark environment.

In this embodiment of this application, three-dimensional layout information of a room is obtained through the head-mounted display device, which is helpful to display a virtual picture in an appropriate region of the room. For example, a virtual scene is displayed on a real wall and just covers the entire wall, thereby improving a sense of reality of the virtual scene, and improving user experience of an XR picture, an XR game, and the like.

In addition, when the user moves in the room while wearing the head-mounted display device, the head-mounted display device can identify a three-dimensional layout diagram of the room, and may prompt the user to avoid an obstacle by transmitting prompt information to the user, to prevent the user from getting into danger and improve safety of the user.

FIG. 3 is a schematic diagram of an implementation environment according to an embodiment of this application. The implementation environment may be implemented as an interactive animation playback system. As shown in FIG. 3, the system 30 may include a terminal device 11 and a server 12.

A target application, such as a client of the target application, is installed and run in the terminal device 11. The terminal device is an electronic device having data calculation, processing, and storage capabilities. The terminal device may be a wearable device, such as a head-mounted display device, smart glasses, and XR glasses. The XR glasses may include AR glasses, MR glasses, VR glasses, and the like. The terminal device may further be a handheld scanner, a smartphone, a tablet computer, a personal computer (PC), or the like. This is not limited in the embodiments of this application. The target application may be any application having a function of determining three-dimensional layout information, such as an image processing application, a projection application, a social application, a payment application, a video application, a music application, a shopping application, or a news application. According to the method provided in the embodiments of this application, each operation may be performed by the terminal device 11, such as a client running in the terminal device 11.

In some embodiments, the system 30 further includes a server 12. The server 12 establishes a communication connection (such as a network connection) with the terminal device 11. The server 12 is configured to provide a background service for the target application. The server may be an independent physical server, or may be a server cluster composed of a plurality of physical servers or a distributed system, and may further be a cloud server providing a cloud computing service.

In the method provided in the embodiments of this application, each operation may be performed by a computer device. The computer device refers to an electronic device having data computing, processing, and storage capabilities. The computer device may be the terminal device 11 in FIG. 3, or may be the server 12.

The technical solutions of this application are described below through several embodiments.

FIG. 4 is a flowchart of a method for determining three-dimensional layout information according to an embodiment of this application. In this embodiment, an example in which the method is applied to the computer device described above is used for description. The method may include at least one of the following operations (410-420).

Operation 410: Obtain a first image and a second image obtained by photographing a same scene region respectively by a first camera and a second camera at a same time.

In some embodiments, the first camera and the second camera photograph the same scene region at the same time and in different positions, so as to obtain the first image and the second image respectively. To be specific, the first image and the second image are images of the scene region captured at different angles. The first image is captured by the first camera, and the second image is captured by the second camera.

In some embodiments, the scene region may refer to a partial region or an entire region of a scene. For example, the scene region may refer to an entire room, or may also refer to a partial region of the room, such as an entrance region of the room, a southeast corner of the room, or an eastern region of the room. This is not specifically limited in the embodiments of this application. A scene may refer to a room, a warehouse, a stadium, a road, a garden, a park, a cockpit, or the like. This is not specifically limited in the embodiments of this application.

In some embodiments, the first camera and the second camera are arranged on the same device, and the relative positions of the first camera and the second camera are fixed. In some embodiments, the relative positions of the first camera and the second camera are fixed during photographing of the same scene. During photographing of different scenes, the relative positions of the first camera and the second camera may be the same or different. The relative positions of the first camera and the second camera may include a distance and a relative direction between the two cameras. In some embodiments, the distance and the relative direction between the first camera and the second camera are adjustable. For example, the distance between the first camera and the second camera may be increased or shortened. For another example, in a case that one of the first camera and the second camera is at a higher position than the other, the first camera and the second camera may be adjusted to the same height by adjusting a height of the first camera and/or the second camera. In some embodiments, a scale or other prompt information exists and may be displayed on the device, to prompt the distance and the relative direction between the first camera and the second camera.

In some embodiments, the device may automatically generate, based on a size of the scene region, recommended information including recommended relative positions of the first camera and the second camera, and transmit the recommended information to a user. In this way, time required for the user to adjust the relative positions of the first camera and the second camera is reduced, thereby improving use convenience of the device.

In some embodiments, the device may be a head-mounted display device, such as XR glasses or smart glasses.

In some embodiments, image parameters of the first image and the second image are the same. For example, image resolutions of the first image and the second image are the same. For another example, shapes and sizes of the first image and the second image are the same. In some embodiments, photographing parameters such as camera types and focal lengths respectively corresponding to the first image and the second image are also the same. Therefore, feature fusion of the two images is facilitated, thereby improving accuracy of fused three-dimensional features, and further improving the accuracy of the three-dimensional layout information.

In some embodiments, the first image and the second image are in the same file format. The file format of the first image and the second image may be JPEG, TIFF, RAW, PNG, BMP, EXIF, or the like. This is not specifically limited in the embodiments of this application.

Operation 420: Generate three-dimensional layout information of the scene region based on a relative position between the first camera and the second camera, a photographing parameter of each of the first camera and the second camera, the first image, and the second image.

In some embodiments, the three-dimensional layout information is configured to obtain a three-dimensional spatial layout of at least one object in a scene region. The object in the scene region may be, but is not limited to, a real object in a real scene, and the real object may be an object placed in a real room, such as a couch or a desk. In some embodiments, the three-dimensional layout information is configured to obtain a three-dimensional spatial layout of a part or an entirety of the real object in the scene region. The three-dimensional layout information may be a three-dimensional space structure layout of a virtual scene space. For example, in a case that the scene region is a partial region of a room, the three-dimensional layout information may be information describing a space layout of a room framework, for example, information such as positions and sizes respectively corresponding to the ceiling, a wall, and a floor. In some embodiments, the three-dimensional layout information may also be layout description information of each object disposed in a virtual scene space. Still taking a room scene space as an example, the three-dimensional layout information may be information that describes positions and spaces occupied by objects such as sofas, tea moods, and ceiling fans disposed in the room.

The three-dimensional layout information includes a position parameter and a size parameter of at least one real object in the scene region. In some embodiments, the scene region corresponds to a spatial coordinate system, and a position of a real object in the scene region may be expressed as spatial coordinates of a feature point (such as a central point or a corner point) of the object in the spatial coordinate system. In some embodiments, in a case that the scene region is a room, an origin of the spatial coordinate system may be located in a center of the room, or may be located in a central position of the floor of the room, and may further be located in a position of a top surface (such as the ceiling of the room) of the room. In some embodiments, in a case that a room includes a rectangular wall, the origin of the spatial coordinate system may further be located at a certain vertex of the rectangular wall, and two mutually perpendicular coordinate axes of the spatial coordinate system may be located on straight lines where two adjacent sides of the rectangular wall are located.

In some embodiments, the relative position includes a distance, and the photographing parameter includes a focal length. In some embodiments, the photographing parameters of the first camera and the second camera are the same. For example, the focal lengths of the first camera and the second camera are the same. In some embodiments, photographing parameters such as exposure compensation, aperture values, and shutter values of the first camera and the second camera are the same.

In some embodiments, the three-dimensional layout information of the scene region includes three-dimensional pose information and annotation information of the at least one real object in the scene region. The three-dimensional pose information of the real object in the scene region includes a position and a posture of the real object in the scene region. In some embodiments, the three-dimensional layout information of the scene region is represented as a three-dimensional layout diagram of the scene region. In some embodiments, the three-dimensional layout diagram includes at least one annotation box. The annotation box may be configured to represent a real object of a frame part of a scene region, such as a ceiling, a floor, or a wall in a room. In some embodiments, the annotation information may include different annotation boxes annotated with different colors in the three-dimensional layout diagram. In some embodiments, the annotation information may include a text annotation of a real object in the three-dimensional layout diagram, such as a "ceiling", a "floor", a "left wall", a "right wall", a "sofa", or a "table". The real object is directly annotated in the three-dimensional layout diagram of the scene region, so that the three-dimensional layout information is more vivid, and the user may visually, clearly, and conveniently learn a three-dimensional layout of the scene region.

In some embodiments, the three-dimensional pose information of the real object in the scene region may refer to a pose of the real object relative to the spatial coordinate system corresponding to the scene region, or may also refer to a pose of the real object relative to a device where the first camera/the second camera/the first camera and the second camera are located. In some embodiments, the three-dimensional pose information of the real object in the scene region includes an orientation of the foregoing annotation box/real object, such as an orientation of the annotation box/real object relative to the device where the first camera/the second camera/the first camera and the second camera are located. For example, if a certain annotation box represents a wall, three-dimensional pose information thereof includes a pose or an orientation of the annotation box/wall relative to the device where the first camera/the second camera/-the first camera and the second camera are located. In some embodiments, the orientation includes directly opposite, upward, downward, leftward, rightward, and the like. In some embodiments, an annotation box may represent a junction between at least one real object in a scene region.

In some embodiments, operation 420 may include the following operations:

1. generating an image feature of the first image and an image feature of the second image;

2. fusing the image feature of the first image and the image feature of the second image based on the relative position between the first camera and the second camera and the photographing parameter of each of the first camera and the second camera, to generate a three-dimensional feature of the scene region, the three-dimensional feature being configured to obtain spatial information of the scene region; and

3. generating the three-dimensional layout information of the scene region based on the three-dimensional feature of the scene region.

In some embodiments, feature extraction is performed on the first image and the second image through image processing, to obtain the image feature of the first image and the image feature of the second image. The image feature of the first image and the image feature of the second image are fused based on the distance between the first camera and the second camera and the focal lengths of the first camera and the second camera, to obtain a three-dimensional feature of the scene region and generate the three-dimensional layout information of the scene region, such as a distance and a three-dimensional pose of at least one object in the scene region relative to the device where the first camera/the second camera/the first camera and the second camera are located, including annotation information (such as a name) corresponding to the at least one object in the scene region. The object in the scene region may be, but is not limited to, a real object in a real scene, and the real object may be an object placed in a real room, such as a couch or a desk. Through feature extraction performed on the images, the features of two pictures may be combined to obtain a three-dimensional feature, and three-dimensional layout information of the scene region may be determined based on the three-dimensional feature. The three-dimensional layout information obtained in this way is more accurate than the two-dimensional information.

In all embodiments of this application, the step 1 generating an image feature of the first image and an image feature of the second image is preferably performed as the following steps:

The first image and the second image are processed by a neural network encoder (such as a ResNet-18 structure) to generate respective image features. This process generally includes multi-stage convolution, pooling, and nonlinear transformation to extract multi-level features such as edges, textures, colors, and structures in the image. The function of the neural network encoder is to convert images into feature vectors that are easily understandable and processed by the computer.

In all embodiments of this application, the step 2 fusing the image feature of the first image and the image feature of the second image based on the relative position between the first camera and the second camera and the photographing parameter of each of the first camera and the second camera is preferably performed by a three-dimensional feature fuser, which includes a neural network designed based on a binocular disparity estimation principle, and a recurrent neural network. The binocular disparity estimation is binocular depth estimation. A depth corresponding to the at least one pixel point in a reference image (the first image or the second image) is calculated by using a distance between two cameras, a focal length, and the like. The recurrent neural network may be, but is not limited to, a GRU to better capture the widely spaced dependencies in the timing data. The Process is preferably performed as the following steps:

  1. Feature fusion based on binocular disparity.

After image features of the first image and the second image are obtained, feature fusion is performed by using a neural network (for example, a cost-volume network) designed based on a binocular disparity estimation principle. This neural network estimates the depth information of the scene by computing the disparity of the same scene point in the two images (i. e., the difference in position of that point in the two images). In particular:

  1) Constructing cost-volume: for each pixel position in the first image, the network searches for, on the second image, a pixel having the same scene point as the second image, so as to form a matching candidate set within a parallax range. At each parallax position in the candidate set, the similarity degree (such as Euclidean distance, SSD or NCC) between the first image feature and the feature of the parallax position corresponding to the second image is calculated, and these similarity values are stacked into a three-dimensional matrix, in which the first dimension and the second dimension correspond to the height and width of the image, and the third dimension corresponds to a parallax value range, so as to obtain cost-volume.

  2)Fusion cost-volume: using a first neural network (e. g. a cost-volume network based on binocular parallax) to process the cost-volume, and by learning feature matching under different difference values, fusing image features of a first image and a second image to generate a fused feature. This step may involve multi-scale feature fusion, attention mechanism, or other neural network techniques to ensure that the fused features can fully reflect the 3D information of the scene. Feature fusion is performed on different layers from coarse to fine, which means that a network may first process matching information of a relatively large parallax range and gradually refine same to a relatively small parallax range, so as to ensure that accurate depth estimation can be obtained even on a detail level. Multi-scale feature fusion facilitates model understanding and processing of nearby and distant objects in a scene, as well as objects of different textures and structures.

In a cost-volume network, the process of feature matching is the process of depth estimation. The network identifies which feature points correspond to the same scene point in two images by learning feature differences under different disparity values, so as to determine depth information of the scene point. The parallax value is directly associated with the depth information.

  3) Attention mechanism (Attention Mechanism) can help the network focus on key areas while ignoring irrelevant or insignificant background information, thereby improving the accuracy and relevance of the generated fusion feature. When processing cost-volume, the network may apply a focus mechanism to assign different weights to feature matching at each parallax value. In this way, when generating a fusion feature, the network will pay more attention to those pixel regions with large amount of information and high matching degree in the parallax estimation, and more rely on those matching points that appear more obvious and more reliable in the parallax estimation.

Finally, the network generates an integrated feature representation, where the representation includes depth information of a scenario and feature information extracted from left and right images. The fused features may be multi-channel, and may include original image features, depth maps, possible attention weight maps, and the like.

2. Recurrent Neural Network Processing.

The recurrent neural network memorizes timing relationships through updates and information dissemination of hidden states in the network. For example, after a new hidden state at a current time step is calculated, it is used as an input of the next time step, and is also used as an output of the current time step. In this way, the hidden state information propagates between different time steps of the sequence, enabling the network to remember long range dependencies in the sequence. In embodiments of this application, the fused features are input into a second neural network, i. e. a recurrent neural network (e. g., GRU). The recurrent neural network can capture the temporal relationships between the features, and is crucial for understanding the continuity of a scene and depth information. It generates three-dimensional features of the scene region by iteratively processing the feature blocks, keeping and updating the internal states (hidden vectors). This three-dimensional feature contains depth, location, and relative placement information of objects in the scene. In other words,

In all embodiments of this application, the step 3 generating the three-dimensional layout information of the scene region based on the three-dimensional feature of the scene region is preferably performed as the following steps:

The fused three-dimensional feature is input into a neural network decoder, and the decoder is usually composed of a convolutional neural network and a fully connected layer and is used for recovering three-dimensional layout information of a scenario from the three-dimensional feature. According to the input three-dimensional feature, the neural network decoder reconstructs a three-dimensional pose and layout of an object in the scene region by using technologies such as reverse convolution or upsampling. This process may also involve post-processing, such as refinement of the depth map, optimization and rectification of the three-dimensional layout to improve the accuracy of the final three-dimensional layout information.

By means of the described steps, the present solution can effectively fuse image features acquired by a binocular camera, and generate layout information accurately reflecting a three-dimensional layout of a scene. This process relies on training of a depth learning model. The model learns how to extract depth information from a binocular image in the training process, and how to convert the information into labels and descriptions of a three-dimensional space layout.

In the embodiments of this application, the image feature of the first image and the image feature of the second image are fused to obtain the three-dimensional feature of the scene region. The three-dimensional feature is configured to obtain the spatial information of the scene region. The spatial information herein may be understood as information included in space. In other words, the three-dimensional feature can reflect information of the scene region in space. Therefore, three-dimensional layout information of the scene region may be generated based on the three-dimensional feature.

In some embodiments, the foregoing device is a head-mounted display device. The method further includes: constructing a virtual scene or a virtual object adapted to the scene region based on the three-dimensional layout information; and displaying the virtual scene or the virtual object in the scene region. The virtual scene is a virtual and unreal scene picture, such as a virtual grassland, a virtual forest, or a virtual house. The virtual scene may be a simulation environment for the real world, or may be a semi-simulation and semi-fiction environment, and may also be a purely fictional environment. The virtual scene may be a two-dimensional virtual scene, may be a 2.5-dimensional virtual scene, or may be a three-dimensional virtual scene. This is not limited in this embodiment of this application. The virtual object may be a virtual creature, and the virtual creature may be in the form of a human, or may be in another form of an animal or a cartoon. This is not limited in the embodiments of this application. The virtual object may further be a virtual item, such as a virtual toy, virtual flowers and plants, or a virtual book. In some embodiments, the virtual object may be a three-dimensional model created based on a skeletal animation technology. In the embodiments of this application, the head-mounted display device is configured to construct the virtual scene or the virtual object based on the three-dimensional layout information, thereby implementing construction of the virtual scene or the virtual object during collection of an image, so that when the user uses the head-mounted device, the head-mounted device can quickly construct the virtual scene or the virtual object through a picture collected by a camera, and project the virtual scene or the virtual object to the user for viewing, thereby helping improve user experience. Certainly, in the embodiments of this application, the first camera and the second camera are arranged on the same device, and the relative positions of the first camera and the second camera are fixed, which not only helps save image collection costs, but also improves image collection efficiency to a certain extent, and further improves generation efficiency of the three-dimensional feature of the scene region.

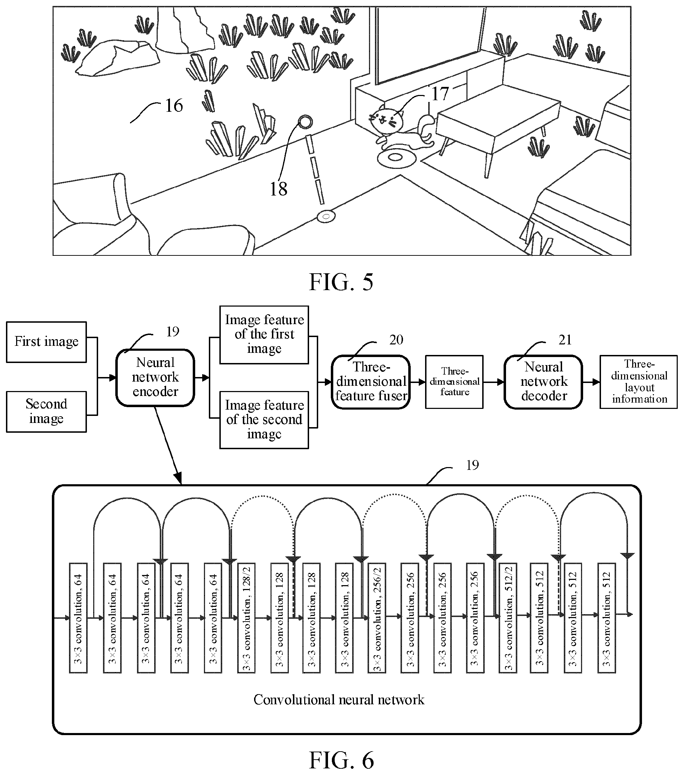

In some embodiments, a picture of the virtual scene may be projected and displayed on a real object in the scene region after a size parameter and a color parameter are adjusted based on the three-dimensional layout information of the scene region. As shown in FIG. 5, the virtual scene 16 may be projected and displayed on a wall based on a shape and a size of at least one wall in the scene region, and the picture of the virtual scene 16 coincides with the wall of the scene region and just covers the wall of the scene region.

In some embodiments, the virtual object may be projected and displayed in the scene region based on the three-dimensional layout information of the scene region. As shown in FIG. 5, a virtual pet 17 is displayed in the scene region based on three-dimensional layout information corresponding to a floor in the scene region. The virtual pet 17 appears to be standing on the floor, and soles of feet of the virtual pet are just attached to the floor. Therefore, the virtual pet does not appear to be suspended in the air or extends below the floor. As shown in FIG. 5, an animation of a projected virtual bouncy ball 18 may show that the virtual bouncy ball 18 falls from the air, touches a real floor, and bounces off the floor.

The virtual scene or the virtual object is displayed in the real scene region, and the virtual scene or the virtual object is combined with the real scene environment, thereby improving the sense of reality of the virtual scene or the virtual object and improving visual experience of the user.

Based on the above, in the technical solutions provided in the embodiments of this application, the same scene region is photographed at the same time by using the first camera and the second camera, to obtain images of the same scene region photographed from two different angles at the same time. To be specific, the images of the scene region are obtained through a binocular camera, and a three-dimensional spatial layout of an object in the scene region is determined based on the images. Compared with two-dimensional layout information, the accuracy of the layout information of the scene region is improved.

In some possible implementations, as shown in FIG. 6, the three-dimensional layout information is obtained by a three-dimensional layout estimation model. The three-dimensional layout estimation model includes a neural network encoder 19, a three-dimensional feature fuser 20, and a neural network decoder 21.

The neural network encoder 19 is configured to generate the image feature of the first image and the image feature of the second image.

For the process of generating the image feature of the first image and the image feature of the second image through the neural network encoder, reference may be made to the following formula:

$$f_l = E(I_l)$$

$$f_r = E(I_r)$$

where $I_l$ represents the first image, $I_r$ represents the second image, $f_l$ represents the image features of the first image, and $f_r$ represents the image features of the second image.

In some embodiments, the neural network encoder is a ResNet-18 structure. As shown in FIG. 6, the neural network encoder 19 removes the last fully connected layer (i.e. an FC layer) and Softmax layer to retain only a convolutional neural network. In some embodiments, a convolutional kernel size of the neural network encoder may be 3x3, and a convolutional kernel of the neural network encoder may also be of another size. The convolutional kernel size of the neural network encoder is not specifically limited in the embodiments of this application.

The three-dimensional feature fuser 20 is configured to fuse the image feature of the first image and the image feature of the second image based on the relative position between the first camera and the second camera and the photographing parameter of each of the first camera and the second camera, to generate the three-dimensional feature of the scene region.

In some embodiments, for the process of generating the three-dimensional feature $f_{3d}$ of the scene region, reference may be made to the following formula:

$$f_{3d} = F(f_l, f_r)$$

In some embodiments, the three-dimensional feature fuser includes a first neural network and a second neural network, the first neural network being a neural network designed based on a binocular disparity estimation principle, and the second neural network being a recurrent neural network. The first neural network is configured to fuse the image feature of the first image and the image feature of the second image to generate a fused feature of the first image and the second image, the fused feature of the first image and the second image being configured to comprehensively obtain the first image and the second image; and the second neural network being configured to generate the three-dimensional feature of the scene region based on the fused feature of the first image and the second image.

In some embodiments, the first neural network is a cost-volume network designed based on the binocular disparity estimation principle. The cost-volume network represents a left-right disparity search space in a stereo matching problem, which is configured to measure a similarity between two views in binocular disparity estimation. In some embodiments, the second neural network is a gate recurrent unit (GRU). The GRU can better capture a dependency in time series data having a large interval, and may solve a gradient problem in long-term memory and back propagation. In some embodiments, the first neural network generates a fused feature of the first image and the second image, which is divided into a plurality of feature blocks (such as 9 feature blocks) that are inputted into the second neural network in sequence. The second neural network generates and saves an implicit vector by learning features of the inputted feature blocks. A new feature block is inputted, and a feature of the new feature block is fused with the saved implicit vector to obtain an updated implicit vector. Until the features of all the feature blocks are learned, a three-dimensional feature of the scene region is generated. The three-dimensional feature obtained in this way may have an association between different regions and has a global feature, thereby improving the overall coordination and layout rationality of the finally obtained three-dimensional layout information, i.e., improving the accuracy of the layout information of the scene region.

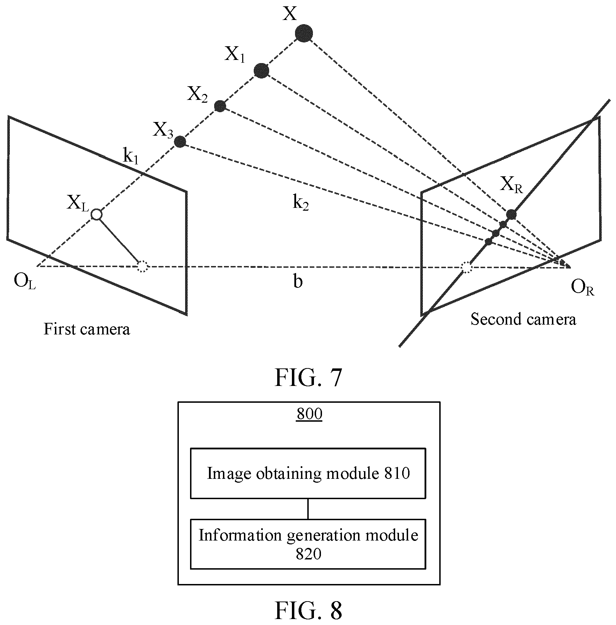

The binocular disparity estimation is also referred to as binocular depth estimation or stereo matching. In some embodiments, as shown in FIG. 7, a disparity map composed of a disparity value d (for example, a disparity value $d_2 = k_1 - k_2$ corresponding to a pixel $X_2$) corresponding to each pixel in a reference image (the reference image may be a first image or a second image) may be obtained through binocular disparity estimation. The disparity value is a difference between a distance of a corresponding point position of a point in a three-dimensional scene in the first image relative to the first camera and a distance of a corresponding point position of the point in the second image relative to the second camera. When a distance b between the first camera and the second camera and a focal length f of the first camera and the second camera are given, a depth $\hat{d}$ corresponding to at least one pixel in the reference image may be automatically calculated from the disparity map. For calculation of the depth $\hat{d}$, reference may be made to the following formula:

$$\hat{d} = {bf}/{d}$$

In all embodiments of this application, the conversion from depth to three-dimensional scene information needs to combine geometrical parameters of a binocular camera, comprising a focal length of the camera and a baseline distance between cameras, and a conversion relationship between an image coordinate and a real-world coordinate. The specific steps are as follows:

1. Converting depth information into point cloud data.

A depth map obtained by using binocular parallax estimation (each pixel corresponds to one depth value), and a two-dimensional coordinate of each pixel can be converted into a three-dimensional space coordinate by combining internal parameters of a single camera (for example, a focal length and a position of an optical center).

In this way, each depth value in the depth map will correspond to a point in the three-dimensional space, forming point cloud data.

2, Fused Point Cloud Data.

Because a binocular camera generally includes two cameras, there are two groups of point cloud data, which respectively correspond to depth maps generated by left and right cameras. In order to construct a unified three-dimensional scene representation, the two groups of point cloud data need to be merged. The merging process may include:

1) Disambiguation: For the same scene point, two cameras may give slightly different depth estimates due to noise or occlusion. These ambiguities need to be resolved by algorithms, such as using median filtering or verification based on matching of sparse feature points.

2) Coordinate conversion: two point clouds may be in different coordinate systems, and need to be converted into the same coordinate system by external parameters (a relative position and a posture) of a camera.

3) Registration and merging: after aligning two coordinate systems, point cloud data can be merged to form a more complete and more accurate three-dimensional scene point cloud.

3. Structured three-dimensional scene information.

Although the point cloud data contains a large amount of three-dimensional information, the format is relatively disordered, and is not easy to understand and further process. In order to generate structured three-dimensional scene information, the following operations may be performed:

1) Plane segmentation: using a plane segmentation algorithm, such as RANSAC (Random Sample Consistency Algorithm), plane features, such as ground, wall, ceiling, etc. , are identified from the point cloud.

2) Object detection and segmentation: further using an object detection algorithm, such as Faster R-CNN and Mask R-CNN, performing object detection and segmentation on point cloud data, and identifying each independent object in a scene.

3) A three-dimensional model or layout is constructed: based on the results of plane segmentation and object detection, a three-dimensional model of a room or other scenes can be constructed, three-dimensional positions, postures and sizes of objects are marked, and structured three-dimensional layout information is formed.

4. Optimization and refinement.

Finally, in order to improve the accuracy of the three-dimensional scene information, optimization and refinement processing may be performed:
Depth map refinement: using filtering techniques (such as bilateral filtering, Gaussian filtering) to smooth and refine depth maps, reducing noise.

Three-dimensional model optimization: optimizing a three-dimensional model by using a geometric constraint or a physical model, for example, ensuring that a wall is vertical and a ground is horizontal, and a relative position between objects is reasonable.

By means of the described steps, depth information obtained by binocular disparity estimation can be converted into structured and accurate three-dimensional scene information, thereby providing a foundation for subsequent XR applications, scene reconstruction, robot navigation, etc. The entire process involves techniques in the fields of computer vision, depth learning, three-dimensional geometry, and the like.

The neural network decoder 21 is configured to generate the three-dimensional layout information of the scene region based on the three-dimensional feature of the scene region. In some embodiments, the neural network decoder is composed of the convolutional neural network and the FC layer.

In some embodiments, for the process of generating the three-dimensional layout information L of the scene region, reference may be made to the following formula:

$$L = D(f_{3d})$$

In the above implementation, the entire model is designed end to end, and the three-dimensional layout information obtained by performing image processing and learning on the first image and the second image through the neural network model can reduce interference of illumination and color information of the image on results, thereby further improving the accuracy of the layout information of the scene region.

In some embodiments, in a case that each scene region is only a partial region of the scene, the method further includes the following operations:

1. Obtain three-dimensional layout information respectively corresponding to a plurality of different scene regions.

The three-dimensional layout information respectively corresponding to different scene regions may refer to three-dimensional layout information of the scene region at different angles.

2. Obtain the three-dimensional layout information of the entire scene based on the three-dimensional layout information respectively corresponding to the plurality of different scene regions.

If the scene region is relatively large, the three-dimensional layout information corresponding to different region parts may be determined from a plurality of angles, and then the three-dimensional layout information respectively corresponding to the plurality of different scene regions are combined to obtain the three-dimensional layout information of the scene seen from the plurality of angles, i.e., obtain the three-dimensional layout information of the entire scene. The three-dimensional layout information of the entire scene may be displayed in the form of a panoramic image, a dynamic image, or a video.

In some embodiments, the combination of the three-dimensional layout information respectively corresponding to the plurality of different scene regions includes the following: When a certain scene region is photographed, the scene region and a junction of the scene region and an adjacent scene region thereof are also photographed. In other words, a first image and a second image of the scene region include the junction of the scene region and the adjacent scene region thereof. After the first image and the second image of the scene region are obtained, three-dimensional layout information of the scene region and three-dimensional layout information of the junction of the scene region and the adjacent scene region thereof are generated (the three-dimensional layout information of the junction may also be included in the three-dimensional layout information corresponding to the scene region). Then the three-dimensional layout information of the plurality of scene regions is fused based on the three-dimensional layout information of at least one scene region and the three-dimensional layout information of the junction of at least one region, to obtain the three-dimensional layout information of the entire scene.

For example, the entire scene region is a room, and the room is divided into four regions: a southeast region, a northeast region, a southwest region, and a northwest region. When a first image and a second image of the southeast region are photographed, partial regions of the northeast region and the southwest region close to the southeast region are also photographed. When three-dimensional layout information of the southeast region is generated, three-dimensional layout information of a junction of the southeast region and an adjacent region is also generated at the same time (the three-dimensional layout information of the junction includes three-dimensional layout information of the partial regions of the northeast region and the southwest region close to the southeast region), and the three-dimensional layout information of the junction and the three-dimensional layout information of the southeast region are three-dimensional layout information as a whole, and jointly constitute the three-dimensional layout information corresponding to the southeast region. After the three-dimensional layout information respectively corresponding to the southeast region, the northeast region, the southwest region, and the northwest region is generated, the three-dimensional layout information corresponding to at least one region is fused and spliced with the three-dimensional layout information of the junction of the region to obtain the three-dimensional layout information of the entire room.

In the embodiment, the three-dimensional layout information respectively corresponding to different scene regions is obtained to obtain more comprehensive three-dimensional layout information of the entire scene from more angles, thereby improving comprehensiveness and richness of the obtained three-dimensional layout information.

An apparatus embodiment of this application is described below, which may be configured to perform the method embodiment of this application. For details not disclosed in the apparatus embodiment of this application, reference is made to the method embodiment of this application.

FIG. 8 is a block diagram of an apparatus for determining three-dimensional layout information according to an embodiment of this application. The apparatus has a function of implementing an example of the foregoing method for determining three-dimensional layout information. The function may be implemented by hardware, or may be implemented by hardware executing corresponding software. The apparatus may be the computer device described above, or may be arranged on the computer device. The apparatus 800 may include an image obtaining module 810 and an information generation module 820.

The image obtaining module 810 is configured to obtain a first image and a second image obtained by photographing a same scene region respectively by a first camera and a second camera at a same time.

The information generation module 820 is configured to generate three-dimensional layout information of the scene region based on a relative position between the first camera and the second camera, a photographing parameter of each of the first camera and the second camera, the first image, and the second image, the three-dimensional layout information being configured to obtain a three-dimensional spatial layout of at least one object in the scene region.

In some embodiments, the information generation module 820 is configured to:

generate an image feature of the first image and an image feature of the second image;

fuse the image feature of the first image and the image feature of the second image based on the relative position between the first camera and the second camera and the photographing parameter of each of the first camera and the second camera, to generate a three-dimensional feature of the scene region, the three-dimensional feature being configured to obtain spatial information of the scene region; and

generate the three-dimensional layout information of the scene region based on the three-dimensional feature of the scene region.

In some embodiments, the three-dimensional layout information is obtained by a three-dimensional layout estimation model, the three-dimensional layout estimation model including a neural network encoder, a three-dimensional feature fuser, and a neural network decoder;

the neural network encoder being configured to generate the image feature of the first image and the image feature of the second image;

the three-dimensional feature fuser being configured to fuse the image feature of the first image and the image feature of the second image based on the relative position between the first camera and the second camera and the photographing parameter of each of the first camera and the second camera, to generate the three-dimensional feature of the scene region; and

the neural network decoder being configured to generate the three-dimensional layout information of the scene region based on the three-dimensional feature of the scene region.

In some embodiments, the three-dimensional feature fuser includes a first neural network and a second neural network, the first neural network being a neural network designed based on a binocular disparity estimation principle, and the second neural network being a recurrent neural network;

the first neural network being configured to fuse the image feature of the first image and the image feature of the second image to generate a fused feature of the first image and the second image, the fused feature of the first image and the second image being configured to comprehensively obtain the first image and the second image; and

the second neural network being configured to generate the three-dimensional feature of the scene region based on the fused feature of the first image and the second image.

In some embodiments, the three-dimensional layout information of the scene region includes three-dimensional pose information and annotation information of the at least one object in the scene region.

In some embodiments, the first camera and the second camera are arranged on a same device, and the relative positions of the first camera and the second camera are fixed.

In some embodiments, the device is a head-mounted display device; and the apparatus 800 further includes a construction module and a display module.

The construction module is configured to construct a virtual scene or a virtual object adapted to the scene region based on the three-dimensional layout information.

The display module is configured to display the virtual scene or the virtual object in the scene region.

In some embodiments, the relative position includes a distance, and the photographing parameter includes a focal length.

Based on the above, in the technical solutions provided in the embodiments of this application, the same scene region is photographed at the same time by using the first camera and the second camera, to obtain images of the same scene region photographed from two different angles at the same time. To be specific, the images of the scene region are obtained through a binocular camera, and a three-dimensional spatial layout of an object in the scene region is determined based on the images. Compared with two-dimensional layout information, the accuracy of the layout information of the scene region is improved.

When the apparatus provided in the foregoing embodiment implements the functions of the apparatus, only division of the foregoing functional modules is used as an example for description. In a practical application, the functions may be completed by different functional modules as required. To be specific, an internal structure of a device is divided into different functional modules to complete all or part of the functions described above. In addition, the apparatus provided in the foregoing embodiment belongs to the same idea as the method embodiment. For details of the specific implementation process thereof, reference is made to the method embodiment. Details are not described herein again.

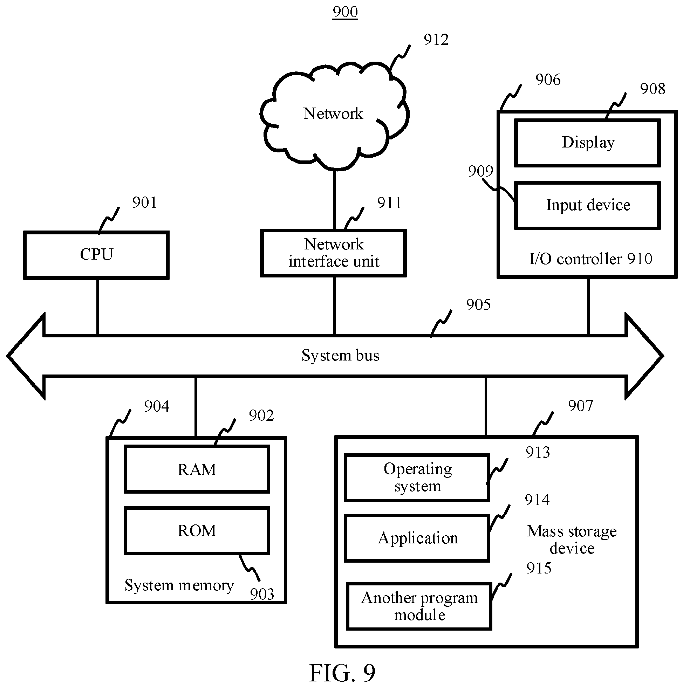

FIG. 9 is a structural block diagram of a computer device according to an embodiment of this application. The computer device is configured to implement the method for determining three-dimensional layout information provided in the foregoing embodiments. Specifically,

the computer device 900 includes a central processing unit (CPU) 901, a system memory 904 including a random access memory (RAM) 902 and a read-only memory (ROM) 903, and a system bus 905 connecting the system memory 904 to the CPU 901. The computer device 900 further includes a basic input/output (I/O) system 906 that helps information transmission between various devices in a computer, and a mass storage device 907 configured to store an operating system 913, an application program 914, and another program module 915.

The basic I/O system 906 includes a display 908 configured to display information and an input device 909 such as a mouse or a keyboard for a user to input information. The display 908 and the input device 909 are both connected to the CPU 901 through an I/O controller 910 connected to the system bus 905. The basic I/O system 906 may further include the I/O controller 910 to be configured to receive and process inputs from a plurality of other devices such as a keyboard, a mouse, and an electronic stylus. Similarly, the I/O controller 910 further provides an output to a display screen, a printer, or another type of output device.

The mass storage device 907 is connected to the CPU 901 by using a mass storage controller (not shown) connected to the system bus 905. The mass storage device 907 and a computer-readable medium associated with the mass storage device provide non-volatile storage for the computer device 900. In other words, the mass storage device 907 may include a computer-readable medium (not shown) such as a hard disk or a compact disc ROM (CD-ROM) drive.

Without loss of generality, the computer-readable medium may include a computer storage medium and a communication medium. The computer storage medium includes volatile and non-volatile media, and removable and non-removable media implemented by using any method or technology used for storing information such as computer-readable instructions, data structures, program modules, or other data. The computer storage medium includes a RAM, a ROM, an erasable programmable ROM (EPROM), an electrically erasable programmable ROM (EEPROM), a flash memory or another solid-state memory, a CD-ROM, a digital video disc (DVD) or another optical memory, a tape cartridge, a magnetic tape, a magnetic disk memory, or another magnetic storage device. Certainly, a person skilled in the art may learn that the computer storage medium is not limited to the foregoing several types. The system memory 904 and the mass storage device 907 may be collectively referred to as a memory.

According to the embodiments of this application, the computer device 900 may be further connected to a remote computer on a network for running through a network such as the Internet. In other words, the computer device 900 may be connected to a network 912 through a network interface unit 911 connected to the system bus 905, or may be connected to another type of network or a remote computer system (not shown) through the network interface unit 911.

In an exemplary embodiment, a computer-readable storage medium is further provided. The storage medium has a computer program stored therein, the computer program, when executed by a processor, implementing the foregoing method for determining three-dimensional layout information.

In some embodiments, the computer-readable storage medium may include a ROM, a RAM, a solid state drive (SSD), an optical disc, or the like. The RAM may include a resistive RAM (ReRAM) and a dynamic RAM (DRAM).

In an exemplary embodiment, a computer program product is further provided. The computer program product includes a computer program, the computer program being stored in a computer-readable storage medium. A processor of a computer device reads the computer program from the computer-readable storage medium, and the processor executes the computer program, so that the computer device performs the foregoing method for determining three-dimensional layout information.

"A plurality of" mentioned herein means two or more. The term "and/or" is an association relationship for describing associated objects and represents that three relationships may exist. For example, A and/or B may represent the following three cases: only A exists, both A and B exist, and only B exists. The character "/" generally indicates an "or" relationship between a preceding associated object and a latter associated object.

The foregoing descriptions are merely exemplary embodiments of this application, but are not intended to limit this application. Any modification, equivalent replacement, or improvement made within the spirit and principle of this application shall fall within the protection scope of this application.

## Claims

1. A method for determining three-dimensional layout information, the method being executable by a computer device and comprising:

   obtaining a first image and a second image obtained by photographing a same scene region respectively by a first camera and a second camera at a same time; and
   generating three-dimensional layout information of the scene region based on a relative position between the first camera and the second camera, a photographing parameter of each of the first camera and the second camera, the first image, and the second image, the three-dimensional layout information being configured to obtain a three-dimensional spatial layout of at least one object in the scene region.

2. The method according to claim 1, wherein the generating three-dimensional layout information of the scene region based on a relative position between the first camera and the second camera, a photographing parameter of each of the first camera and the second camera, the first image, and the second image comprises:

   generating an image feature of the first image and an image feature of the second image;
   fusing the image feature of the first image and the image feature of the second image based on the relative position between the first camera and the second camera and the photographing parameter of each of the first camera and the second camera, to generate a three-dimensional feature of the scene region, the three-dimensional feature being configured to obtain spatial information of the scene region; and
   generating the three-dimensional layout information of the scene region based on the three-dimensional feature of the scene region.

3. The method according to claim 2, wherein the three-dimensional layout information is obtained by a three-dimensional layout estimation model, the three-dimensional layout estimation model comprising a neural network encoder, a three-dimensional feature fuser, and a neural network decoder;

   the neural network encoder being configured to generate the image feature of the first image and the image feature of the second image;
   the three-dimensional feature fuser being configured to fuse the image feature of the first image and the image feature of the second image based on the relative position between the first camera and the second camera and the photographing parameter of each of the first camera and the second camera, to generate the three-dimensional feature of the scene region; and
   the neural network decoder being configured to generate the three-dimensional layout information of the scene region based on the three-dimensional feature of the scene region.

4. The method according to claim 3, wherein the three-dimensional feature fuser comprises a first neural network and a second neural network, the first neural network being a neural network designed based on a binocular disparity estimation principle, and the second neural network being a recurrent neural network;

   the first neural network being configured to fuse the image feature of the first image and the image feature of the second image to generate a fused feature of the first image and the second image, the fused feature of the first image and the second image being configured to comprehensively obtain the first image and the second image; and
   the second neural network being configured to generate the three-dimensional feature of the scene region based on the fused feature of the first image and the second image.

5. The method according to any one of claims 1 to 4, wherein the three-dimensional layout information of the scene region comprises three-dimensional pose information and annotation information of the at least one object in the scene region.

6. The method according to any one of claims 1 to 5, wherein the first camera and the second camera are arranged on a same device, and the relative positions of the first camera and the second camera are fixed.

7. The method according to claim 6, wherein the device is a head-mounted display device; and
   the method further comprises:

   constructing a virtual scene or a virtual object adapted to the scene region based on the three-dimensional layout information; and
   displaying the virtual scene or the virtual object in the scene region.

8. The method according to any one of claims 1 to 7, wherein the relative position comprises a distance, and the photographing parameter comprises a focal length.

9. An apparatus for determining three-dimensional layout information, the apparatus comprising:

an image obtaining module, configured to obtain a first image and a second image obtained by photographing a same scene region respectively by a first camera and a second camera at a same time; and
an information generation module, configured to generate three-dimensional layout information of the scene region based on a relative position between the first camera and the second camera, a photographing parameter of each of the first camera and the second camera, the first image, and the second image, the three-dimensional layout information being configured to obtain a three-dimensional spatial layout of at least one object in the scene region.

10. A computer device, comprising a processor and a memory, the memory having a computer program stored therein, the computer program being loaded and executed by the processor to implement the method for determining three-dimensional layout information according to any one of claims 1 to 8.

11. A computer-readable storage medium, having a computer program stored therein, the computer program being loaded and executed by a processor to implement the method for determining three-dimensional layout information according to any one of claims 1 to 8.

12. A computer program product, comprising a computer program, the computer program being stored in a computer-readable storage medium, and a processor reading the computer program from the computer-readable storage medium and executing the computer program to implement the method for determining three-dimensional layout information according to any one of claims 1 to 8.

FIG. 1

FIG. 2

30

Network connection

FIG. 3

| Obtain a first image and a second image obtained by photographing a same scene region respectively by a first camera and a second camera at a same time | 410 |
|---|---|
| Generate three-dimensional layout information of the scene region based on a relative position between the first camera and the second camera, a photographing parameter of each of the first camera and the second camera, the first image, and the second image | 420 |

FIG. 4

FIG. 5

FIG. 6

X

$X_1$

$X_2$

$X_3$

$k_1$

$X_L$

$k_2$

$X_R$

$O_L$

b

$O_R$

First camera

Second camera

FIG. 7

800

Image obtaining module 810

Information generation module 820

FIG. 8

900

912

Network

906

908

Display

909

Input device

901

911

CPU

Network interface unit

I/O controller 910

905

System bus

904

902

RAM

907

913

Operating system

914

ROM

Application

Mass storage device

System memory

903

915

Another program module

FIG. 9

## INTERNATIONAL SEARCH REPORT

| International application No. |
| --- |
| **PCT/CN2023/129245** |

| A. | CLASSIFICATION OF SUBJECT MATTER |
| --- | --- |

G06T 7/73(2017.01)i

According to International Patent Classification (IPC) or to both national classification and IPC

| B. | FIELDS SEARCHED |
| --- | --- |

Minimum documentation searched (classification system followed by classification symbols)

IPC：G06T7

Documentation searched other than minimum documentation to the extent that such documents are included in the fields searched

Electronic data base consulted during the international search (name of data base and, where practicable, search terms used)

CNTXT, ENTXT, ENTXTC, VEN, WPABSC, CNKI, Bing, IEEE: 第二, 双目, 相机, 拍摄, 摄像头, 同时, 同一时刻, 位置, 三维, 场景, 空间, 机器学习, 深度学习, 神经网络, second, binocular, camera+, photograph, synchronously, simultaneously, at the same time, scene, three dimension, site, location, place, position, space, neural network, deep learning, machine learning

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 111311757 A (HUIZHOU TCL MOBILE COMMUNICATION CO., LTD.) 19 June 2020 (2020-06-19) <br> description, paragraphs [0027]-[0061] | 1-3, 5-12 |
| Y | CN 113012299 A (BEIJING SENSETIME SCIENCE TECHNOLOGY DEVELOPMENT CO., LTD.) 22 June 2021 (2021-06-22) <br> description, paragraphs [0077]-[0084] | 1-3, 5-12 |
| A | CN 110874818 A (ALIBABA GROUP HOLDING LIMITED) 10 March 2020 (2020-03-10) <br> entire document | 1-12 |
| A | CN 115115709 A (GREAT WALL MOTOR COMPANY LIMITED) 27 September 2022 (2022-09-27) <br> entire document | 1-12 |
| A | CN 115294275 A (ZHUHAI PROMETHEUS VISION TECHNOLOGY CO., LTD.) 04 November 2022 (2022-11-04) <br> entire document | 1-12 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 December 2023** | **07 December 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/129245** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 115426444 A (VIVO MOBILE COMMUNICATION (HANGZHOU) CO., LTD.) 02 December 2022 (2022-12-02)<br>entire document | 1-12 |
| A | AU 2017265068 A1 (CANON K. K.) 06 June 2019 (2019-06-06)<br>entire document | 1-12 |
| A | US 10853970 B1 (BARTEC CORP.) 01 December 2020 (2020-12-01)<br>entire document | 1-12 |
| A | US 2021295606 A1 (ADOBE INC.) 23 September 2021 (2021-09-23)<br>entire document | 1-12 |
| A | WO 2022247414 A1 (BEIJING HORIZON INFORMATION TECHNOLOGY CO., LTD.) 01 December 2022 (2022-12-01)<br>entire document | 1-12 |
| A | 牛文龙 等 (NIU, Wenlong et al.). "人机共融的远程态势智能感知系统 (Remote Situational Intelligent Sensing System for Human-Machine Integration)"<br>国防科技大学学报 (Journal of National University of Defense Technology),<br>Vol. 43, No. 6, 24 December 2021 (2021-12-24), 85-94<br>entire document | 1-12 |
| A | F E Fadzli et al. "3D Telepresence for Remote Collaboration in Extended Reality (xR) Application"<br>IOP Conference Series: Materials Science and Engineering,<br>Vol. 979, 17 November 2020 (2020-11-17), 1-11<br>entire document | 1-12 |
| A | ZHANG, Junning et al. "Three-dimensional Reconstruction Method based on Target Recognition for Binocular Humanoid Robot"<br>2016 International Conference on Progress in Informatics and Computing (PIC),<br>19 June 2017 (2017-06-19), 355-359<br>entire document | 1-12 |

Form PCT/ISA/210 (second sheet) (July 2022)

**INTERNATIONAL SEARCH REPORT**
Information on patent family members

International application No.

**PCT/CN2023/129245**

| Patent document cited in search report | | | Publication date (day/month/year) | Patent family member(s) | | | Publication date (day/month/year) |
|---|---|---|---|---|---|---|---|
| CN | 111311757 | A | 19 June 2020 | None | | | |
| CN | 113012299 | A | 22 June 2021 | None | | | |
| CN | 110874818 | A | 10 March 2020 | None | | | |
| CN | 115115709 | A | 27 September 2022 | None | | | |
| CN | 115294275 | A | 04 November 2022 | None | | | |
| CN | 115426444 | A | 02 December 2022 | None | | | |
| AU | 2017265068 | A1 | 06 June 2019 | None | | | |
| US | 10853970 | B1 | 01 December 2020 | None | | | |
| US | 2021295606 | A1 | 23 September 2021 | US | 11257298 | B2 | 22 February 2022 |
| WO | 2022247414 | A1 | 01 December 2022 | JP | 2023530545 | A | 19 July 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310070284